# EUROPÄISCHE PATENTANMELDUNG

(11) **EP 1 241 441 A2**
(43) Veröffentlichungstag der Anmeldung: **18.09.2002**
(21) Anmeldenummer: 02005074.6
(22) Anmeldetag: 06.03.2002
(51) Int. Cl.: G01C 11/02, H04N 1/387

(54) **Verfahren und Vorrichtung zum Aufnehmen von Luftbildern für die Luftbildaufklärung**

(30) Priorität: 13.03.2001 DE 10112009
(71) Anmelder: EMT Ingenieurbüro für Elektro-Mechanische Technologien Dipl.-Ing. Hartmut Euer, 82377 Penzberg (DE)
(72) Erfinder: Euer, Hartmut, Dipl.-Ing., 82393 Iffeldorf (DE); Wernicke, Joachim, Prof. Dr.-Ing., 14167 Berlin (DE)
(74) Vertreter: Kern, Wolfgang, Dipl.-Ing.

(57) **Zusammenfassung**

Verfahren zum Aufnehmen von Luftbildern für die Luftbildaufklärung und Vorrichtung zum Durchführen eines solchen Verfahrens.

Die Erfindung bezieht sich auf ein Verfahren zum Aufnehmen von Luftbildern für die Luftbildaufklärung, bei welchem die aufgenommenen Luftbilder aus einer zeitlichen Folge von Einzelbildern in Form von Videosignalen zur Anzeige gebracht werden.

Erfindungsgemäß wird verfahrensseitig ein streifenförmiger Bodenbereich in Form eines Einzelbildfächers aufgenommen. Vorrichtungsseitig ist zum Aufnehmen des streifenförmigen Bodenbereichs in Form eines Einzelbildfächers wenigstens eine Kamera vorgesehen. Gemäß einer ersten Ausführungsform sind mehrere Videokameras fächerartig vorgesehen und angeordnet. Gemäß einer anderen Ausführungsform ist lediglich eine Videokamera vorgesehen, deren optische Achse stufenweise verstellbar ist.

## Beschreibung

Die Erfindung bezieht sich auf ein Verfahren zum Aufnehmen von Luftbildern für die Luftbildaufklärung nach dem Oberbegriff des Patentanspruchs 1 sowie eine Vorrichtung zum Durchführen eines solchen Verfahrens nach dem Oberbegriff des Patentanspruchs 7.

Sogenannte Aufklärungs-Fluggeräte sind aus der Praxis bekannt und üblicherweise mit elektronischen Luftbildkameras ausgestattet, die ihre Bilder über eine Funkstrecke in Echtzeit an eine Bodenstation übermitteln. Derartige Kameras können in unterschiedlichen Spektralbereichen empfindlich sein und unterschiedliche Gesichts- oder Abbildungsfelder gemäß der bei der betreffenden Kamera verwendeten Tele-, Normal- oder Weitwinkeloptik sowie unterschiedliche Blickrichtungen haben.

Bei den vorgenannten elektronischen Kameras handelt es sich beispielsweise um sogenannte Bildzeilenkameras auf der Grundlage einer Sensorzeile aus Bildpunkten, auch Pixelzeile genannt, oder um sogenannte Bildflächenkameras auf der Grundlage einer Sensormatrix aus Bildpunkten, auch Pixelmatrix genannt.

Bei der vorgenannten Bildzeilenkamera ergibt sich das Bild sequentiell aus einer Folge einzelner Bildzeilen. Dabei ist vorausgesetzt, dass die Flugbewegung über dem abzubildenden Erdboden senkrecht zur Bildzeile fortschreitet. Diese Voraussetzung ist bei Fluggeräten auf der Basis von Starrflüglern regelmäßig gegeben. Eine weitere Voraussetzung ist eine Raumlagestabilität der Bildzeile während eines bestimmten Aufnahmeintervalls.

Bei den vorgenannten Bildflächenkameras ergibt sich das gesamte Bild simultan durch gleichzeitige Belichtung und nachfolgende elektronische Auslesung der Sensormatrix aus den Bildpunkten.

Das zuvor erwähnte Bildzeilenprinzip wird im Stand der Technik der Luftbildaufklärung nur bei hochauflösenden Wärmebildkameras verwendet, während die vorerwähnten Bildflächenkameras hauptsächlich für den sichtbaren Spektralbereich und den nahen Infrarotbereich oder als niedrigauflösende Wärmebildkameras verwendet werden.

Aus dem Stand der Technik sind ferner Bildflächenkameras bekannt, welche Fernsehsignale gemäß internationaler Normen ausgeben. Diese Kameras werden nachfolgend Videokameras genannt. Bei den ausgegebenen Signalen handelt es sich zumeist um analoge Fernsehsignale, bei neueren Videokameras sowie bei sogenannten Internet-Kameras auch um digitale Fernsehsignale. Es ist auch bekannt, solche Videokameras in der luftgestützten Aufklärung einzusetzen. Das Videosignal besteht aus einer zeitlichen Folge von inhaltlich grundsätzlich unabhängigen Einzelbildern mit einer festen Bildfolgefrequenz. Diese beträgt beispielsweise 25 Einzelbilder pro Sekunde bei der PAL-Fernsehnorm oder 30 Einzelbilder pro Sekunde bei der NTSC-Fernsehnorm. Die Einzelbilder sind in der Regel in je zwei zeilenweise ineinander kämmende Halbbilder unterteilt. Diese Unterteilung geht aus historischen Gründen zurück auf die Fernseh-Normenkompatibilität. Die vorgenannten Videokameras können Monochrom- oder Farbkameras in CCD (charge-coupled device)-Technik oder CMOS (complementary metaloxide semiconductor)-Technik sein.

Ein Nachteil der genannten Videokameras besteht in ihrer im Vergleich zu fotografischen Bildern niedrigen Bildauflösung. PAL-Einzelbilder zeigen gemäß einer üblichen Konvention beispielsweise eine Auflösung von etwa 400.000 Pixeln (Format 576 x 768 Pixel). Demgegenüber beträgt die Auflösung fotografischer Luftbilder mindestens einige Millionen Pixel.

Um den vorgenannten Nachteil der geringen Auflösung zu vermeiden, werden in den genannten Fluggeräten häufig elektronische Kameras höherer Auflösung meist in Form digitaler Standbildkameras eingesetzt. Die Bildauflösung derartiger Kameras kommt derjenigen konventioneller fotografischer Luftbilder nahe. Allerdings wird die höhere Auflösung durch den Verlust der sogenannten Echtzeitfunktion erkauft, welcher durch die großen Bilddatenvolumen und die erforderlichen Übertragungsdauern, welche über die vorhandenen Funkstrecken vielfach im Sekundenbereich liegen, bedingt. ist. Der im Videobild fließende subjektive Bewegungseindruck geht bei in Sekundenabständen eingehenden Standbildern verloren. Durch den zusätzlichen Einsatz digitaler Datenkompressionsverfahren kann dieser Verlust der Echtzeitfunktion gemildert, nicht jedoch aufgehoben werden.

Der Erfindung liegt die Aufgabe zugrunde, ein Verfahren der eingangs erwähnten Art anzugeben, mittels dem die Luftbilder hochauflösend und in Echtzeit aufgenommen werden können. Der Erfindung liegt femer die Aufgabe zugrunde, eine Vorrichtung zum Durchführen eines solchen Verfahrens anzugeben.

Diese Aufgabe wird erfindungsgemäß durch ein Verfahren mit den Merkmalen des Patentanspruchs 1 sowie eine Vorrichtung mit den Merkmalen des Patentanspruchs 7 gelöst.

Vorteilhafte Weiterbildungen sind Gegenstand der jeweiligen Unteransprüche.

Verfahrensseitig wird erfindungsgemäß ein streifenförmiger Bodenbereich in Form eines Einzelbildfächers aufgenommen. Dadurch ergibt sich ein gegenüber einer gemäß dem Stand der Technik angeordneten Videokamera vergrößerter Bildstreifen aus einer bestimmten Anzahl n von Einzelbildern. Vorteilhaft ist dabei insbesondere eine Bildauflösung, so zum Beispiel Pixelanzahl, in Querrichtung des Bildstreifens, d.h. senkrecht zur Flugrichtung, welche ohne Berücksichtigung geringfügiger Überlappungen an den Einzelbildgrenzen um das n-fache gegenüber dem Einzelbild gesteigert ist. In Längsrichtung des Bildstreifens, d.h. parallel zur Flugrichtung, ist die Bildauflösung im Vergleich zu derjenigen des Einzelbildes gemäß dem Stand der Technik jedoch unverändert. Im Falle von beispielsweise sieben Kameras (n = 7) umfasst der Bildstreifen in der Höhe 576 Pixel, in der Breite jedoch mehr als 5.300 Pixel (768 x 7 Pixel), so dass sich für den Bildstreifen insgesamt mehr als 3 Millionen Pixel ergeben. Dies entspricht etwa der Auflösung eines fotografischen Luftbildes.

Vorteilhafterweise werden die den streifenförmigen Bodenbereich abbildenden Einzelbilder gleichzeitig oder sequentiell aufgenommen, wobei vorzugsweise die Einzelbilder in Form von Videosignalen gespeichert, anschließend sequentiell ausgegeben und zu einem Gesamtbild zusammengesetzt werden. Die nachfolgende Aneinanderreihung der Bildstreifen in Flugrichtung ergibt somit eine detailreiche, hochauflösende, im Prinzip endlose Darstellung eines größeren Geländestreifens, welcher einem sogenannten Bildteppich unter dem Flugweg entspricht. Es ist ferner durch bildinhaltsbezogene Verfahren der elektronischen Bildverarbeitung möglich, die einzelnen Bildstreifen ihrerseits zu einem fast oder vollständig nahtlosen Gesamtbild zusammenzufassen.

Gemäß einer Weiterbildung des erfindungsgemäßen Verfahrens erfolgt das Zusammensetzen der Einzelbilder zu einem Gesamtbild unter Berücksichtigung der Flugbewegung, insbesondere der Flugbahn- und Raumlagebewegung, zum Zeitpunkt der Aufnahme der Einzelbilder, wobei sich die Einzelbilder vorzugsweise geringfügig überlappen. Insofern können die Einzelbilder unter entsprechenden Verschiebungen und Drehungen gemäß der Flugbewegung zu den Bildstreifen aneinander gereiht werden. Dieser Verfahrensschritt des mosaikartigen Aufbaus des Gesamtbildes hat den Vorteil, dass zeitaufwändige Bildinhaltsrechnungen nicht erforderlich sind. Ein apparativer Mehraufwand tritt in aller Regel nicht auf, weil die Flugbahn- und Raumlagedaten des Fluggeräts zumeist ohnehin an die Bodenstation zu übermitteln sind, um eine Zuordnung des Blickfeldes der Videokamera zur Landkarte vornehmen zu können.

Gemäß einer anderen Weiterbildung des erfindungsgemäßen Verfahrens werden für Aufnahmen bei Nacht kurzzeitige Blitzlichter vorzugsweise im Fernsehtakt der Einzelbildaufnahme geschaltet. Dadurch sind Verwacklungen der Einzelbilder infolge der Bewegung der Videokamera während der Belichtung praktisch ausgeschlossen. Vorteilhaft ist dabei ferner, dass für die Aufklärung bei Nacht die kosten- und gewichtsaufwändigen Wärmebildkameras entbehrlich werden, welche außerdem in temperaturhomogenen Szenen nur unbefriedigende Bildkontraste ergeben. Es ist aber auch möglich, für die Bildaufnahme Dauerlicht zu verwenden, sofern eine der Flughöhe und der Empfindlichkeit der Videokamera entsprechende Lichtleistung des betreffenden Scheinwerfers gewählt wird. Mit Hilfe der kurzzeitigen Blitzlichter lässt sich darüber hinaus vorteilhaft Beleuchtungsenergie einsparen.

Vorrichtungsseitig ist erfindungsgemäß zum Aufnehmen eines streifenförmigen Bodenbereichs in Form eines Einzelbildfächers wenigstens eine Videokamera vorgesehen. Wie zuvor erwähnt, lässt sich mit Hilfe des Einzelbildfächers quer zur Bewegungsrichtung, d.h. quer zur Flugrichtung des Fluggeräts, eine beträchtlich höhere Auflösung erreichen, wobei der Echtzeitcharakter der Bewegungsabfolge vollständig oder zumindest nahezu vollständig erhalten bleibt.

Gemäß einer bevorzugten Weiterbildung der Erfindung sind mehrere Videokameras fächerartig derart vorgesehen und angeordnet, dass eine Aneinanderreihung der Bildfelder der einzelnen Videokameras den Bildstreifen in Form des Einzelbildfächers ergibt. Durch die zueinander feste fächerförmige Anordnung entsprechend verschiedenen Blickrichtungen um die Längsachse des Fluggeräts können die einzelnen, den Bildstreifen letztlich ergebenden Einzelbilder gleichzeitig aufgenommen werden. Dabei überlappen sich die Bildfelder jeweils benachbarter Kameras geringfügig. Im Falle der vorerwähnten PAL- oder NTSC-Fernsehnorm können mit 25 bzw. 30 Einzelbildern pro Sekunde bei einer Anordnung von n = 7 Kameras etwa vier Bildstreifenzyklen je Sekunde durchlaufen bzw. aufgenommen oder abgetastet werden, so dass sich ein nahezu stetiger Bewegungseindruck der Bildszene entsprechend einer Bewahrung der Echtzeitfunktion ergibt. Im Falle der erwähnten mehreren Videokameras in fester Fächeranordnung können die Einzelbilder der Videokameras für einen Bildstreifen, wie erwähnt, gleichzeitig aufgenommen, anschließend aber sequentiell zur Auswerteeinheit übertragen werden. In diesem Fall entfällt eine nachträgliche Korrektur des aus mehreren Bildstreifen zusammengesetzten Gesamtbildes aufgrund der Flugbewegung des Fluggeräts.

Gemäß einer anderen Weiterbildung der Erfindung ist lediglich eine Videokamera vorgesehen, deren optische Achse stufenweise verstellbar ist, wobei entweder die Videokamera selbst oder ein Umlenkspiegel vor dem Objektiv der Videokamera schwenkbar ausgebildet ist. Dadurch lässt sich der apparative Aufwand in Bezug auf die Videokameras und das Gewicht der gesamten erfindungsgemäßen Vorrichtung günstig beeinflussen.

Vorteilhafterweise ist die Schwenkbewegung systematisch und synchron zum Takt der Video-Einzelbilder in Winkelstufen entsprechend den gewünschten Aufnahmerichtungen der Einzelbilder durchführbar. Daraus folgt, dass die Aufnahmerichtung, auch Blickrichtung genannt, zyklisch während eines möglichst kurzen Zeitintervalls verstellt wird und dann während der Belichtungszeit wenigstens eines Einzelbildes oder Halbbildes konstant bleibt. Es ist klar, dass die vorerwähnte stufenweise Schwenkbewegung um die Längsachse des Fluggeräts erfolgt. Ein zusätzlicher Vorteil der erfindungsgemäßen Vorrichtung mit mehreren Videokameras oder mit einer schwenkbaren Videokamera im Vergleich zu einer Weitwinkel-Streifenaufnahme besteht darin, dass selbst unter den als begrenzt anzunehmenden Raumlagebewegungen des Fluggeräts ein breiter Bodenstreifen stets im Blick bleibt. Insofern kann das Videokamera-System zellenfest montiert sein und bedarf nicht einer aufwändigen kardanischen Schwenkvorrichtung, wie sie in Aufklärungs-Fluggeräten nach dem Stand der Technik gebräuchlich ist. Durch den Wegfall solcher mechanischer Einrichtungen für eine Kameraschwenkung wird mit der technischen Vereinfachung zugleich auch eine erhöhte Betriebszuverlässigkeit erreicht.

Gemäß einer anderen Weiterbildung der Erfindung weist jede Videokamera einen Bildspeicher und vorzugsweise einen Infrarot-Scheinwerfer auf. Damit ist es möglich, die Bildaufnahme von einer Übertragung der Bildpunkte zur Auswerteeinheit zu entkoppeln.

Gemäß einer vorteilhaften Weiterbildung der Erfindung weist der jeder Videokamera zugeordnete Infrarot-Scheinwerfer eine Strahlrichtung auf, die parallel zur optischen Achse der jeweiligen Videokamera geführt ist. Damit kann auch bei Verwendung von lediglich einer Videokamera der Bodenbereich auch bei Nacht streifenförmig aufgenommen werden. Durch die einfache Umlenkung des Infrarot-Scheinwerfers ist eine einfache Möglichkeit geschaffen, die Strahlrichtung des Scheinwerfers an diejenige der optischen Achse der Videokamera anzupassen.

Gemäß einer anderen Weiterbildung der Erfindung ist jede Videokamera mit einer Auswerteeinheit verbunden, welche vorzugsweise einen synchronen Videoumschalter, einen Modulator und Funksender, einen Demodulator und einen Bildstreifensynthetisator aufweist, wobei vorzugsweise zusätzlich eine Raumlage- und Flugbahnsensorik vorgesehen und an den Funksender angeschlossen ist und jede Videokamera, der Videoumschalter, der Modulator und Funksender und die Raumlage- und Flugbahnsensorik am Fluggerät und der Demodulator sowie der Bildstreifensynthetisator bodenseitig angeordnet sind. Damit wird einerseits das Gewicht des Fluggeräts möglichst minimal gehalten, andererseits ist es möglich, die von der erfindungsgemäßen Vorrichtung aufgenommenen Bilder in Echtzeit am Boden zu verfolgen und gegebenenfalls in die Flugbahn des Fluggeräts eingreifen zu können. Durch geeignete Flugbahnschleifen des Fluggeräts kann somit ein bestimmter Bodenpunkt über längere Zeit im Blick gehalten werden, wodurch eine Echtzeitbeobachtung von Bewegungsvorgängen innerhalb der Bodenszene ermöglicht ist.

Gemäß einer anderen Weiterbildung der Erfindung ist an den Bildstreifensynthetisator eine Bildmontageeinrichtung zum Zusammensetzen eines Gesamtbildes aus den vom Bildstreifensynthetisator ausgegebenen Bildstreifen angeschlossen. Mit Hilfe der Bildmontageeinrichtung ist es daher möglich, einen sogenannten zusammenhängenden Bildteppich aus den einzelnen Bildstreifen zu erzeugen und so einen guten Überblick über das aufgenommene Gelände zu erlangen.

Ausführungsbeispiele des Erfindungsgegenstandes werden nachfolgend anhand der Zeichnung näher erläutert. Es zeigen:
- Fig. 1: eine schematische, perspektivische Ansicht eines eine Vorrichtung zum Aufnehmen von Luftbildern für die Luftbildaufklärung aufweisenden Fluggeräts;
- Fig. 2: eine schematische Vorderansicht der Vorrichtung zum Aufnehmen von Luftbildern für die Luftbildaufklärung gemäß einer ersten Ausführungsform; und
- Fig. 3: eine schematische Vorderansicht der Vorrichtung zum Aufnehmen von Luftbildern für die Bildaufklärung gemäß einer anderen Ausführungsform.

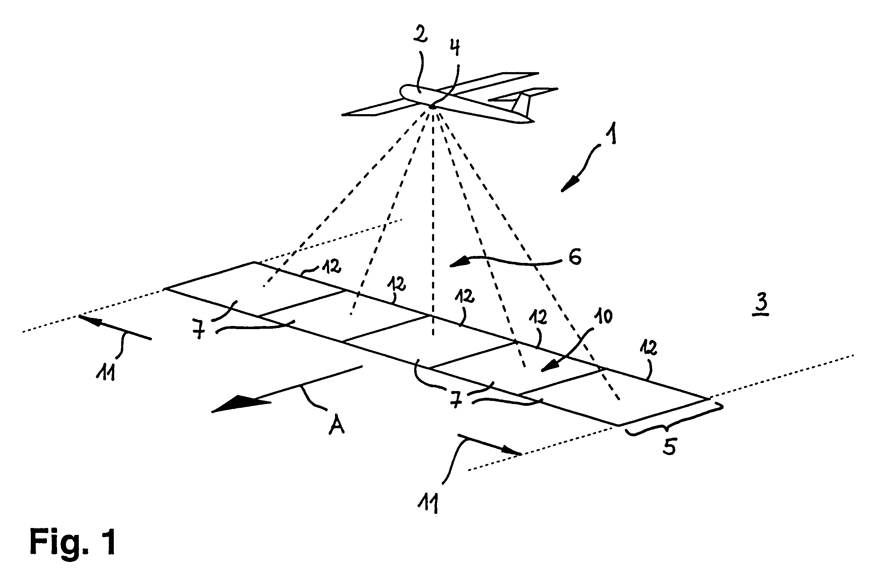

In Fig. 1 ist schematisch ein Anwendungsfall einer Vorrichtung 1 zum Aufnehmen von Luftbildern für die Luftbildaufklärung in einer perspektivischen Ansicht dargestellt. Die Vorrichtung 1 ist am Rumpf eines Fluggeräts 2, beispielsweise eines Aufklärungs-Fluggeräts in Form eines Starrflüglers, befestigt und zum Boden 3 gerichtet.

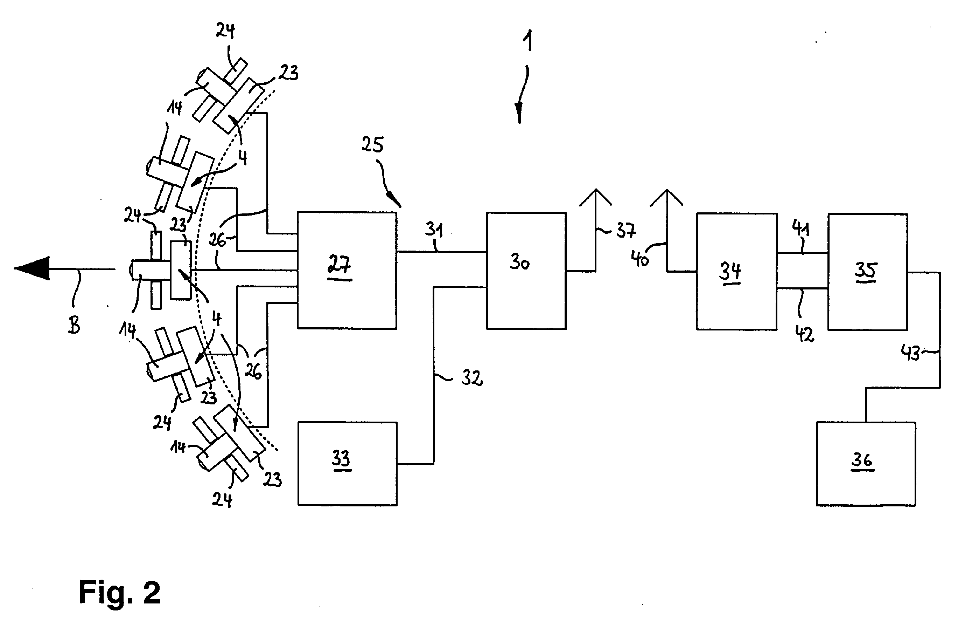

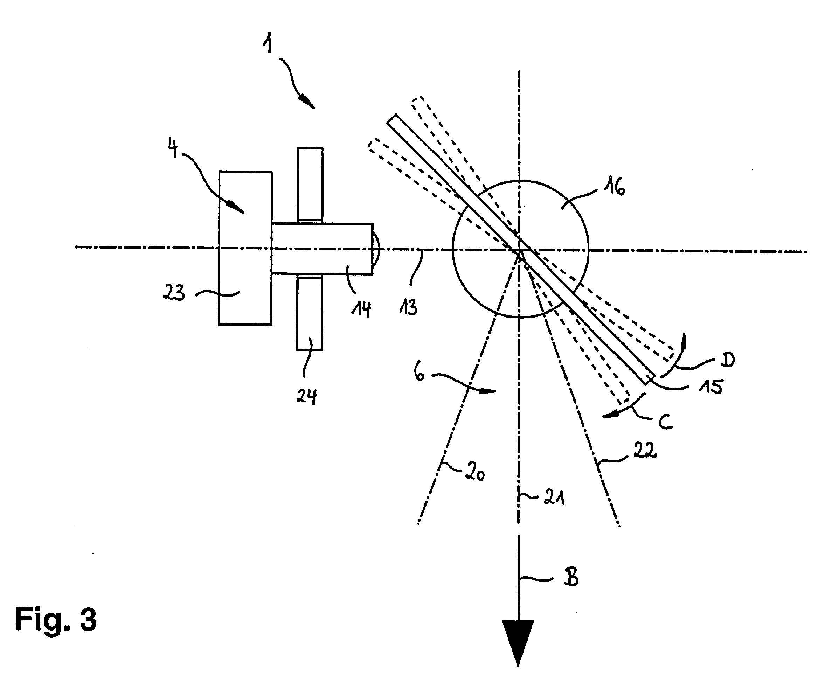

Die Vorrichtung 1 hat wenigstens eine in Fig. 1 nicht näher gezeigte, jedoch in den Fig. 2 und 3 dargestellte Videokamera 4 zum Aufnehmen eines streifenförmigen Bodenbereichs 5 in Form eines Einzelbildfächers 6, wobei sich benachbarte Einzelbilder 7 geringfügig überlappen. Eine derartige Überlappung ist der Einfachheit halber in Fig. 1 nicht dargestellt.

Beispielhaft sind in Fig. 1 fünf (n = 5) nebeneinander angeordnete Einzelbilder 7 gezeigt, welche zusammen den streifenförmigen Bodenbereich 5 und den Einzelbildfächer 6 bilden. Die wenigstens eine Kamera ist vom Fluggerät 2 etwa senkrecht zum Boden 3 gerichtet; der streifenförmige Bodenbereich 5, welcher letztlich einen Bildstreifen 10 bildet, erstreckt sich quer zur fortschreitenden Flugbewegung des Fluggeräts 2 entlang dem Pfeil A über dem abzubildenden Boden 3, nämlich dem Erdboden oder Gelände. Damit lässt sich mit Hilfe der erfindungsgemäßen Vorrichtung 1 ein mit der Flugbewegung entlang dem Pfeil A fortschreitendes Bild von dem Boden 3 erstellen, dessen Breite 11 der Gesamtbreite der aneinander gereihten Einzelbilder 7 entspricht.

Eine erste Ausführungsform der erfindungsgemäßen Vorrichtung 1 ist in Fig. 2 schematisch in einer Vorderansicht dargestellt. Gemäß dieser Ausführungsform sind fünf (n = 5) Videokameras 4 fächerartig derart vorgesehen und angeordnet, dass eine Aneinanderreihung der Bildfelder 12 der einzelnen Videokameras 4, wie in Fig. 1 angedeutet, den Bildstreifen 10 in Form des Einzelbildfächers 6 ergibt. Der Pfeil B bezeichnet dabei näherungsweise die Lotrichtung zum Boden 3, welcher in Fig. 1 angedeutet, in Fig. 2 jedoch weggelassen ist.

Eine andere Ausführungsform der erfindungsgemäßen Vorrichtung 1 ist schematisch in Fig. 3 gezeigt. In diesem Fall ist lediglich eine Videokamera 4 vorgesehen, deren optische Achse 13 stufenweise verstellbar ist. Dazu kann gemäß einer nicht gezeigten Ausführungsform die Videokamera selbst schwenkbar ausgebildet sein. Gemäß der in Fig. 3 gezeigten Ausführungsform ist vor dem Objektiv 14 der Videokamera 4 ein Umlenkspiegel 15 mit Hilfe eines Stellantriebs 16 schwenkbar angeordnet, so dass sich der Einzelbildfächer 6 aufgrund des Fächers der umgelenkten optischen Achsen 20, 21, 22 ergibt. Es ist klar, dass zum Aufnehmen des in Fig. 1 gezeigten Bildstreifens 10 mit fünf Einzelbildern 7 gemäß der in Fig. 3 gezeigten Ausführungsform der Vorrichtung 1 letztlich auch fünf unterschiedliche Stellungen des Umlenkspiegels und damit fünf umgelenkte optische Achsen zu erzeugen sind. Der Einfachheit und der besseren Übersicht halber sind in Fig. 3 jedoch lediglich drei unterschiedliche Stellungen gezeigt, wobei sich in der in durchgezogenen Linien dargestellten Stellung des Umlenkspiegels 15 die umgelenkte optische Achse 21, mit der im Uhrzeigersinn in Richtung des Pfeils C verschobenen Stellung des Umlenkspiegels 15 die umgelenkte optische Achse 20 und mit der im Gegenuhrzeigersinn in Richtung des Pfeils D verschobenen Stellung des Umlenkspiegels 15 die umgelenkte optische Achse 22 ergibt. Die im Uhrzeigersinn bzw. im Gegenuhrzeigersinn verschobenen Stellungen in Richtung der Pfeile C und D des Umlenkspiegels 15 sind in Fig. 3 gestrichelt angedeutet.

Die durchgeführte Schwenkbewegung ist systematisch und synchron zum Takt der Video-Einzelbilder 7 in Winkelstufen entsprechend den gewünschten Aufnahmerichtungen der Einzelbilder durchführbar. Somit lässt sich über ein Verschwenken der optischen Achse 13 ein in Fig. 1 angedeuteter Einzelbildfächer 6 erreichen, welcher aus einer bestimmten Anzahl von Einzelbildern 7 zusammengesetzt ist. Diese Anzahl beträgt gemäß der in Fig. 1 gezeigten Ausführungsform fünf Einzelbilder. Der Bildstreifen 10 kann aber auch aus einer anderen Anzahl von Einzelbildern, beispielsweise aus sieben (n = 7) Einzelbildern, zusammengesetzt sein. In Fig. 3 bezeichnet der Pfeil B wieder näherungsweise die Lotrichtung zum Boden, welcher in Fig. 1 mit dem Bezugszeichen 3 versehen ist.

Jede Videokamera 4 hat einen Bildspeicher 23 sowie einen Scheinwerfer 24, welcher vorzugsweise als Infrarot-Scheinwerfer ausgebildet ist. Jeder Scheinwerfer 24 ist fest mit der Videokamera 4 verbunden, wobei sich der Lichtstrahl jedes Scheinwerfers parallel zur optischen Achse der jeweiligen Kamera erstreckt. Um die visuelle Auffälligkeit der Scheinwerfer zu vermeiden, sind insbesondere Lichtquellen im nahen Infrarot, d.h. zwischen 0,7 und 1,1 µm, besonders geeignet. Die eingangs erwähnten üblichen Monochrom-Videokameras sind in diesem Bereich empfindlich.

In Bezug auf die Ausführungsform gemäß Fig. 3 ist klar, dass der Umlenkspiegel 15 im Sinne einer Doppelfunktion auch die Lichtstrahlen des Scheinwerfers 24 der Videokamera 4 zum Boden hin entsprechend seiner jeweiligen Stellung umlenkt. Statt eines Scheinwerfers mit Dauerlicht kann dieser auch derart ausgebildet sein, dass kurzzeitige Blitzlichter im Femsehtakt der Einzelbildaufnahme oder Halbbildaufnahme erzeugt werden. Damit sind auch Luftbildaufnahmen bei Nacht möglich. Es ist klar, dass die Lichtleistung der Scheinwerfer entsprechend der Flughöhe und der Helligkeit des aufzunehmenden Geländes sowie der Empfindlichkeit der Videokamera(s) zu wählen ist. Die einzelnen Bildstreifen ergeben sich daher gemäß Fig. 1 beim Überflug des Fluggeräts 2 mit der wenigstens eine Videokamera 4 aufweisenden Vorrichtung 1 über eine Landschaft oder ein Gelände in Flugrichtung gemäß dem Pfeil A.

Gemäß Fig. 2 ist jede Videokamera 4 mit einer Auswerteeinheit 25 über Leitungen 26 verbunden. Die Auswerteeinheit 25 umfasst einen synchronen Videoumschalter 27, der über die Leitungen 26 mit den einzelnen Videokameras 4 verbunden ist, sowie einen Modulator und Funksender 30, welcher über eine Leitung 31 mit dem Videoumschalter 27 verbunden ist.

Über eine Leitung 32 ist ferner eine Raumlage- und Flugbahnsensorik 33 mit dem Modulator und Funksender 30 verbunden.

Die Auswerteeinheit 25 umfasst femer einen Demodulator 34 sowie einen Bildstreifensynthetisator 35 und eine mit letzterem verbundene Bildmontageeinrichtung 36. Die drei erstgenannten Komponenten Videoumschalter 27, Modulator und Funksender 30 sowie Raumlage- und Flugbahnsensorik 33 sind am Fluggerät 2, die drei letztgenannten Komponenten Demodulator 34, Bildstreifensynthetisator 35 sowie Bildmontageeinrichtung 36 sind hingegen bodenseitig angeordnet.

Die Übertragung der Signale erfolgt beispielsweise über Funk mit Hilfe einer an den Modulator und Funksender 30 angeschlossenen Sendeantenne 37 sowie einer an den Demodulator 34 angeschlossenen Empfangsantenne 40. Die empfangenen Signale werden dem Bildstreifensynthetisator 35 über Leitungen 41, 42 zugeführt, wobei die empfangenen Signale zunächst in Videosignale und Flugzustandssignale separiert werden. Die Videosignale werden dem Bildstreifensynthetisator beispielsweise über die Leitung 41, die Flugzustandssignale beispielsweise über die Leitung 42 zugeführt. Die Bildmontageeinrichtung 36 ist über eine Leitung 43 mit dem Bildstreifensynthetisator 35 verbunden und in der Lage, aus den einzelnen, vom Bildstreifensynthetisator 35 über die Leitung 43 gelieferten Bildstreifen ein zusammenhängendes Gesamtbild in Form eines sogenannten Bildteppichs zusammenzusetzen. Bei einer vereinfachten Ausführungsform kann die letztgenannte Bildmontageeinrichtung 36 auch entfallen.

Nachfolgend wird das erfindungsgemäße Verfahren zum Aufnehmen von Luftbildern für die Luftbildaufklärung näher erläutert.

Dabei werden die aufgenommenen Luftbilder aus einer zeitlichen Folge von Einzelbildern in Form von Videosignalen zur Anzeige gebracht. Erfindungsgemäß wird ein streifenförmiger Bodenbereich 5 in Form eines Einzelbildfächers 6 aufgenommen. Dazu werden die den streifenförmigen Bodenbereich 5 abbildenden Einzelbilder 7 gleichzeitig oder sequentiell aufgenommen. Im Falle der in Fig. 2 gezeigten Ausführungsform erfolgt die Aufnahme der Einzelbilder vorzugsweise gleichzeitig, im Fall der in Fig. 3 gezeigten Ausführungsform sequentiell, d.h. nacheinander.

Die aufgenommenen Einzelbilder 7 werden in Form von Videosignalen im Bildspeicher 23 jeder Videokamera 4 gespeichert, anschließend sequentiell ausgegeben und zu einem den gesamten Bildstreifen 10 betreffenden Gesamtbild zusammengesetzt. Von n Videokameras wird demnach jeweils ein Einzelbild aufgenommen, sequentiell unverzüglich an die vorerwähnten Komponenten der Auswerteeinheit 25 am Boden übertragen und dort mit Hilfe des elektronischen Bildstreifensynthetisators 35 zu einem Bildstreifen entsprechend der Anordnung der n Videokameras und der Bewegung des Fluggeräts 2 während der Aufnahmesequenz zusammengesetzt. In dem in Fig. 1 gezeigten Ausführungsbeispiel sind n = 5 Videokameras vorgesehen.

Die Bildstreifenmontage kann bildinhaltsgestützt durch Verfahren der digitalen Bildverarbeitung, d.h. auf Bildinhaltsvergleiche gestützte sogenannte Bildmosaikmontage, erfolgen. Dabei kann es bei Einsatz von größeren Gesichtsfeldwinkeln erforderlich sein, die durch die Raumlagegeometrie oder gegebenenfalls Objektivverzeichnungen bedingten systematischen, nichtlinearen Randverzerrungen der Einzelbilder vor der Streifenmontage, d.h. vor der Erzeugung des gesamten Bildstreifens, zu entzerren.

Erfindungsgemäß erfolgt die sogenannte Mosaikmontage, d.h. das Zusammensetzen der Einzelbilder zu einem den Bildstreifen bildenden Gesamtbild unter Berücksichtigung der Flugbewegung, insbesondere der Flugbahn- und Raumlagebewegung, zum Zeitpunkt der Aufnahme der Einzelbilder. Die Mosaikmontage kann daher auch ohne Bildinhaltsbezug unter Zuhilfenahme der Besonderheiten der Luftbild-Aufnahmesituation dadurch erfolgen, dass die relativen geometrischen Lagen der Einzelbilder durch gleichzeitige Messung und Funkübertragung der Daten der Flugbahn- und Raumlagebewegung des Fluggeräts ermittelt und dem Bildstreifensythetisator 35 über die erwähnte Funkstrecke zugeführt werden. Die Einzelbilder 7 werden dann unter entsprechenden Verschiebungen und Drehungen gemäß der Flugbewegung zu den jeweiligen Bildstreifen aneinandergereiht, wobei die vorerwähnte Überlappung aufrechterhalten bleibt.

Für Aufnahmen bei Nacht werden kurzzeitige Blitzlichter, vorzugsweise im Fernsehtakt der Einzelbildaufnahme, geschaltet.

Die bodenseitige Objektauflösung wird in dem Maße feiner, in dem die Gesichtsfeldwinkel der Einzelbilder schmaler werden. Gemäß einer besonders bevorzugten Ausrührungsform können deshalb Teleobjektive bei den genannten Videokameras zum Einsatz kommen. Dadurch ergibt sich der zusätzliche Vorteil, dass die mit derartigen Objektiven aufgenommenen Einzelbilder meist vernachlässigbare, nichtlineare Randverzerrungen aufweisen, so dass der Bildstreifenmontage keine Randentzerrung der Einzelbilder vorausgehen muss. Beispielsweise ergibt eine Aneinanderreihung von n = 7 Videokameras mit Teleobjektiven von je 6° Bildfeldbreite einen Bildstreifen von ca. 42° Bildfeldbreite, was einem Weitwinkelobjektiv entspricht. Voraussetzung für den Einsatz der genannten Teleobjektive ist eine ausreichende Bewegungsruhe des Fluggeräts während der Belichtungszeit des jeweiligen Einzelbildes, d.h. eine Begrenzung der Winkelgeschwindigkeit des Fluggeräts. Diese Voraussetzung ist in der Luftbildaufklärung meist erfüllt oder erfüllbar.

Gemäß der in Fig. 2 gezeigten Ausführungsform sind die Videokameras 4 jeweils mit einem Bildspeicher 23 versehen. Diese speichern einen gleichzeitig aufgenommenen Satz von Einzelbildem der Videokamera, so dass die Einzelbilder anschließend sequentiell ausgegeben werden können. Damit entfällt eine Korrektur bei der Bildstreifenmontage aufgrund der Flugbewegung während der Aufnahmesequenz. Im Falle der in Fig. 3 gezeigten Ausführungsform der Erfindung werden die Einzelbilder sequentiell in verschiedenen Richtungen gemäß dem Einzelbildfächer 6 aufgenommen. In diesem Fall kann eine Korrektur bei der Bildstreifenmontage entsprechend der Flugbewegung während der Aufnahmesequenz erforderlich sein.

Damit ist es möglich, eine hochauflösende Luftbildaufklärung in Echtzeit durchzuführen.

## Patentansprüche

1. Verfahren zum Aufnehmen von Luftbildern für die Luftbildaufklärung,
bei welchem die aufgenommenen Luftbilder aus einer zeitlichen Folge von Einzelbildern in Form von Videosignalen zur Anzeige gebracht werden,
**dadurch gekennzeichnet, dass**
ein streifenförmiger Bodenbereich in Form eines Einzelbildfächers aufgenommen wird.

2. Verfahren nach Anspruch 1, **dadurch gekennzeichnet, dass** die den streifenförmigen Bodenbereich abbildenden Einzelbilder gleichzeitig oder sequentiell aufgenommen werden.

3. Verfahren nach Anspruch 1 oder 2, **dadurch gekennzeichnet, dass** die Einzelbilder in Form von Videosignalen gespeichert, anschließend sequentiell ausgegeben und zu einem Gesamtbild zusammengesetzt werden.

4. Verfahren nach Anspruch 3, **dadurch gekennzeichnet, dass** das Zusammensetzen der Einzelbilder zu einem Gesamtbild unter Berücksichtigung der Flugbewegung, insbesondere der Flugbahn- und Raumlagebewegung, zum Zeitpunkt der Aufnahme der Einzelbilder erfolgt.

5. Verfahren nach einem der vorhergehenden Ansprüche, **dadurch gekennzeichnet, dass** sich die Einzelbilder geringfügig überlappen.

6. Verfahren nach einem der vorhergehenden Ansprüche, **dadurch gekennzeichnet, dass** für Aufnahmen bei Nacht kurzzeitige Blitzlichter vorzugsweise im Fernsehtakt der Einzelbildaufnahme geschaltet werden.

7. Vorrichtung zum Durchführen eines Verfahrens nach einem der vorhergehenden Ansprüche,
**dadurch gekennzeichnet, dass**
zum Aufnehmen eines streifenförmigen Bodenbereichs (5) in Form eines Einzelbildfächers (6) wenigstens eine Videokamera (4) vorgesehen ist.

8. Vorrichtung nach Anspruch 7, **dadurch gekennzeichnet, dass** mehrere Videokameras (4) fächerartig derart vorgesehen und angeordnet sind, dass eine Aneinanderreihung der Bildfelder (12) der einzelnen Videokameras (4) den Bildstreifen (10) in Form des Einzelbildfächers (6) ergibt.

9. Vorrichtung nach Anspruch 7, **dadurch gekennzeichnet, dass** lediglich eine Videokamera (4) vorgesehen ist, deren optische Achse (13) stufenweise verstellbar ist, wobei entweder die Videokamera (4) selbst oder ein Umlenkspiegel (15) vor dem Objektiv (14) der Videokamera (4) schwenkbar ausgebildet ist.

10. Vorrichtung nach Anspruch 9, **dadurch gekennzeichnet, dass** die Schwenkbewegung systematisch und synchron zum Takt der Video-Einzelbilder (7) in Winkelstufen entsprechend den gewünschten Aufnahmerichtungen der Einzelbilder (7) durchführbar ist.

11. Vorrichtung nach einem der Ansprüche 7 bis 10, **dadurch gekennzeichnet, dass** jede Videokamera (4) einen Bildspeicher (23) und vorzugsweise einen Infrarot-Scheinwerfer (24) aufweist.

12. Vorrichtung nach Anspruch 11, **dadurch gekennzeichnet, dass** der jeder Videokamera (4) zugeordnete Infrarot-Scheinwerfer (24) eine Strahlrichtung aufweist, die parallel zur optischen Achse (13) der jeweiligen Videokamera (4) geführt ist.

13. Vorrichtung nach einem der Ansprüche 7 bis 12, **dadurch gekennzeichnet, dass** jede Videokamera (4) mit einer Auswerteeinheit (25) verbunden ist, welche vorzugsweise einen synchronen Videoumschalter (27), einen Modulator und Funksender (30), einen Demodulator (34) und einen Bildstreifensynthetisator (35) aufweist.

14. Vorrichtung nach Anspruch 13, **dadurch gekennzeichnet, dass** eine Raumlage- und Flugbahnsensorik (33) vorgesehen und an den Funksender (30) angeschlossen ist und dass jede Videokamera (4), der Videoumschalter (27), der Modulator und Funksender (30) und die Raumlage- und Flugbahnsensorik (33) am Fluggerät (2) und der Demodulator (34) sowie der Bildstreifensynthetisator (35) bodenseitig angeordnet sind.

15. Vorrichtung nach Anspruch 13 oder 14, **dadurch gekennzeichnet, dass** an den Bildstreifensynthetisator (35) eine Bildmontageeinrichtung (36) zum Zusammensetzen eines Gesamtbildes aus den vom Bildstreifensynthetisator (35) ausgegebenen Bildstreifen (10) angeschlossen ist.
